# EUROPEAN PATENT APPLICATION

(11) **EP 3 260 991 A1**
(43) Date of publication of application: **27.12.2017**
(21) Application number: 16175174.8
(22) Date of filing: 20.06.2016
(51) Int. Cl.: G06F 17/30

(54) **SYSTEM AND METHOD CONFIGURED TO EXECUTE DATA MODEL TRANSFORMATIONS ON DATA FOR CLOUD BASED APPLICATIONS**

(71) Applicant: Siemens Aktiengesellschaft, 80333 München (DE)
(72) Inventor: Adler, Michael, 90469 Nürnberg (DE); Verma, Amit, 91058 Erlangen (DE)

(57) **Abstract**

The invention concerns a method and a system to expose the common data model in a wider range of data model specific views by using a meta-data store, a load balancer (32), model router (33) and model transformer (34).

## Description

The invention relates to the area of cloud based industrial data analytics and applications. Typically data from field level devices and systems in an industrial automation is collected and transferred to a cloud for analytics. A cloud is a network device with a cloud computing infrastructure (herein after referred to as cloud). Cloud computing infrastructure can be any infrastructure, that allows shared computing services to be accessed and utilized by cloud-capable devices. The cloud includes one or more communications network. In some cases, cloud can be provided by a cloud provider as a platform-as-a-service (PaaS), and the services can reside and execute in the cloud as a cloud-based service. Cloud services can generally include, but are not limited to, data storage, data analysis, control applications (e.g., applications that can generate and deliver control instructions to industrial devices based on analysis of near real-time system data or other factors), visualization applications such as cloud-based HMIs, reporting applications, or other such cloud - based applications. The cloud comprises data persistence and management, application development and run time environment, and a set of applications that analyze data to provide insights for production enhancement, predictive maintenance, energy and process optimization, product life-cycle management etc..

It is noted, that common expressions like HTTP etc. are not separately explained. They are common knowledge in the world of software.

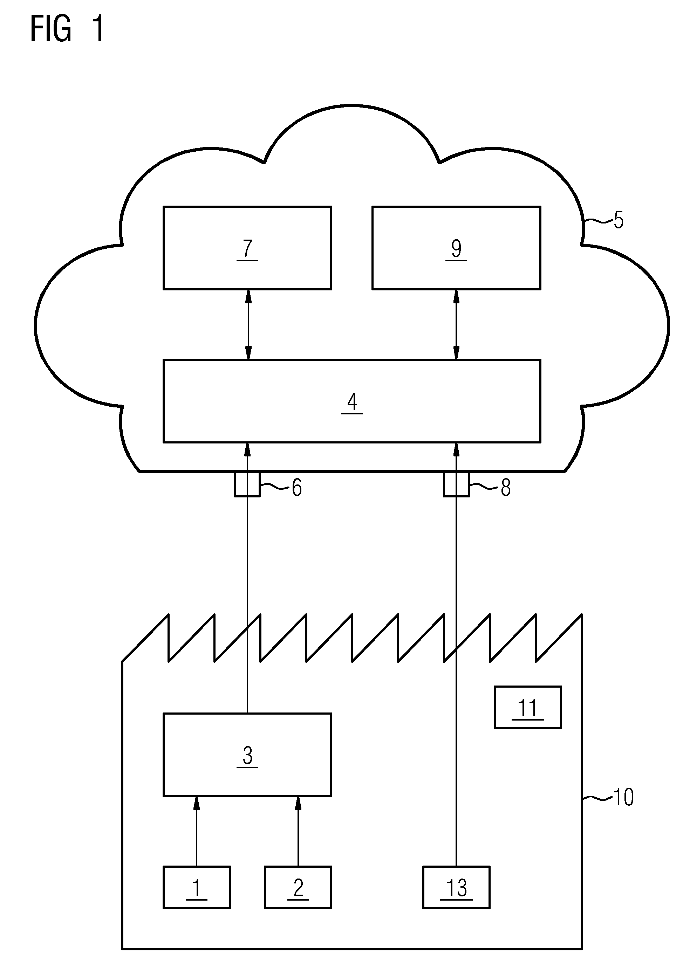

FIG 1 shows an embodiment according to the state of the art. data from field level devices and systems in an industrial automation 10 is collected and transferred to the cloud 5 for analytics. A cloud based application is an application hosted by cloud or having access to the cloud.

The industrial domain is characterized by a number of standard and vertical specific data standards. There are open standards driven by organizations like IEEE, ANSI/ISA, ISO, IEC, OPC and many more. Also, there are many niche standards that are evolving from vendor specific solutions. Some examples of domain specific standards are BACNet (BACnet = communications protocol for building automation and control networks) with a Bacnet-Data-Source 1 or OPC (Open Platform Communications (OPC) = series of standards and specifications for industrial telecommunication) with an OPC-Data-Source 2. Further -not shown and explained in detail- domain specific standards are OMAC PakML (for packaging machinery), ISO 15926 (for oil and gas industry), IEC 61850 (for electrical substation automation), etc. The data are collected via a data-collection-agent 3, then transmitted to a proprietary-interface 6 and afterwards transmitted to a common cloud data model 4.

One of the fundamental advantages of a cloud based data analytics approach is that the data collected from different standards, could be normalized or standardized in a common cloud data model 4 implemented in the cloud 5. This makes the analytics applications 7 running in the cloud agnostic to the underlying data standards. Applications 7 once developed for the common cloud data model 4 could provide analytics for data collected from different standards. But, this is true mainly for newly developed applications.

Unfortunately, there is often a need to port legacy applications to the cloud 5 in order to get quickly started with the cloud based use cases.

In FIG 1, an application 7 that provides an algorithm to optimize the machine parameters, obtained via OPC, OPC-UA (Open Platform Communications - Unified Architecture) interface from the machine controller here for example the agent 3, to induce the quality of the finished product, is shown. To port this application 7 to the cloud 5 as a cloud-based application 7, it has to be re-developed so as to use the cloud data standard, instead of the OPC data standard from the agent 3. This leads to major re-development efforts.

To get quickly started with the cloud based use cases, there is often a need to port legacy applications 9 to the cloud 5.

Here some legacy application 9 that provides- for example-also an algorithm to optimize the machine parameters is considered, whereas the machine parameters are given for example in a publish-subscribed data source structure 13. These parameters are obtained via OPC-interface 8, to induce the quality of the finished product by the cloud-based application 7. Before porting this application to the cloud 5, it has to be re-developed so as to use the cloud data standard e.g. the common cloud data model 4, instead of the OPC data standard provided in publish-subscribed data source structure 13. This leads to major re-development efforts. Moreover, if the above application can access data from other machines (with different data standards), in the same OPC data standard, it can be used to fulfill a broader range of use cases.

In another use case, there are onsite legacy applications 11 which are running onsite locally, from where data is collected. These onsite legacy applications 11 might also require a systematic access to the cloud based application for local data analytics and reporting functions. The advantage of having onsite legacy applications 11 access the cloud based application is that in this way, the onsite legacy applications 11 can access data from heterogeneous automation systems via the cloud 5 in a unified manner. But also here this results in major re-development efforts.

Usually for the cloud providers the legacy applications 11 have to be re-developed by implementing the new data models/standards of the given cloud 5. Data model transformers or protocol convertors (e.g. BACNet (building automation and control networks communication protocol) to OPC or OPC to Modbus, etc.) are present in the field level for connecting homogenous automation systems, but data model transformations for cloud based applications are non-existent.

Technologies known in the state of the art, like ETL - (Extract, Transform, Load) and DMT (Data Model Transformation), do not solve the problem of model transformation for application based data queries in cloud environments as they only refer to schema mapping technology and data field oriented protocol mappings.

Therefore a data standard/model transformation for cloud based applications is needed.

It is therefore a first object of the present invention to specify a system configured to execute standard /data model transformations for cloud based applications.

It is a further object of the present invention to specify a method configured to execute standard /data model transformation for cloud based applications.

The system-specific object is inventively achieved by means of a system configured to execute data model transformations on data for cloud based applications comprising:
- a computer device with a cloud infrastructure having a data store,
- the data store having data of interest, whereas the data of interest are stored in a cloud storage data model,
- a cloud-based application which is configured to query the data of interest by a request in a desired data protocol based on a desired data model structure,
- a meta-data store which at least comprises the meta data of the data of interest,
- a load balancer with a cloud infrastructure, which is configured for receiving the request and for routing the request,
- a model router which is configured for receiving the routed request and for identifying the desired data protocol and for transmitting the request based on the identified desired data protocol to a model transformer,
- the model transformer which is configured for receiving the transmitted request and performing the data model transformation by:
   - accessing the data of interest in the data store and the meta data of data of interest in the meta-data store,
   - accessing a transformation rules database which contains rules for each specific transformation between the cloud storage data model and the desired data protocol,
   - determining a response based on the rules and based on existing composed information in the data store and in the meta-data store.

The method-specific object is achieved by means of a method configured to execute data model transformations on data for cloud based applications the method comprising:
- providing a computer device with a cloud infrastructure having a data store,
- providing of data of interest in the data store, whereas the data of interest are stored in a cloud storage data model,
- providing a cloud based application which is configured to query the data of interest by a request in a desired data protocol based on a desired data model structure,
- providing a meta-data store which at least comprises the meta data of the data of interest,
- providing a load balancer with a cloud infrastructure which is configured for receiving the request and for routing the request,
- providing a model router which is configured for receiving the routed request and for identifying the desired data protocol and for transmitting the request based on the identified desired data protocol to a model transformer,
- providing the model transformer which is configured for receiving the transmitted request and performing the actual data model transformation by:
   - accessing the data of interest in the data store and the meta data of the data of interest in the meta-data store,
   - accessing a transformation rules database which contains rules for each specific transformation between the cloud storage data model and the desired data protocol,
   - determining a response based on the rules and based on existing composed information in the data store and in the meta-data store.

According to the invention it was recognized that the specialty of the problem of such model transformation is the need, not only to transform the structure of data, but also the relationship between data entities and semantical information.

The advantage of the invention in comparison to the state of the art in this area is leverage cloud based scalability by design. This enhances the performance and cost efficiency of such a system and method. Furthermore the separation between transformation logic and transformation rules allows proper scale out of many instances, based on request load. In addition, the transformation concept allows protection of investments into existing tools that work on protocol standards like OPC-UA while still preserving the benefits of the cloud internal data store for example storage costs and query performance. The transformation concept also allows legacy applications running onsite to access the cloud database without any application redevelopment effort. Since this invention does not only consider structural mappings like most of the solutions in the state of the art, but also includes semantics and relationship information by the meta data, it is possible to express complex data like it is represented in OPC-UA, BACNet and other industrial data models.

The dependent claims list further advantageous measures which can be combined with one another, as desired, in order to achieve further advantages.

In a preferred embodiment the data store is not directly accessible to the cloud based application. Furthermore the meta-data store is not directly accessible to the cloud based application.

In another preferred embodiment the desired data protocol is a TCP (Transmission Control Protocol) or/and a UDP (User Datagram Protocol) based protocol and the request is provided in the desired data protocol.

In a further preferred embodiment the model router is configured to have computing capacity, based on the cloud load balancing.

In a further preferred embodiment the model router is configured to identify the desired data protocol by technical attributes based on the desired data protocol. Preferably the technical attributes are the port number and/or the HTTP header information and/or request structure.

In a further embodiment the meta data are configured to comprise the relationship between the data of interest stored in the data store and the required semantical information. The meta language is a language or symbols used when language itself is being discussed or examined. Metadata could be therefore defined as data that provides information about other data.

In the case of more than one model routers the one which receives the request will handle the upcoming data exchange between the application and the specific model transformer.

In another preferred embodiment the transformation rules are configured to comprise at least one of the following information:
- Data structure mappings from the cloud storage data model to the desired protocol in a desired data model structure,
- Data semantics mappings from the cloud storage data model semantics to the desired model semantics,
- Data relationship mappings from the cloud storage data model relationships to the desired model relationships,
- Reduction rules if the desired data model does not support the same expressiveness, e.g. for relations,
- Reduction rules if the cloud storage data model does not support the same expressiveness as the desired data model.
For example: Two data models might describe data differently and to a different level of detail. So a one-to-one mapping between these data models may not be 100%. In this case the reduction rules help to interpolate/guess missing data when data from one data model is transformed to another data model. For example, the OPC-UA data model supports an attribute called Data Quality. Data quality indicates the extent of correctness of a particular data field/variable. Let's consider there is another data model that does not support the Data Quality attribute. When the data is transformed from this data model to the OPC-UA data model, reduction rules would be used to infer/estimate the attribute Data Quality for the OPC-UA data model.

In another preferred embodiment the model transformer is configured to fetch the rules from the rule database and/or fetch all required data from the data store based on the application's demand and/or fetch all associated meta data of the data of interest from the meta-data store and / or generate a response based on the data of interest in the format of the requested data model based on the rules.

Further features, properties and advantages of the present invention are found in the following description of exemplary embodiments with respect to the appended figures, of which:
- FIG 1: shows the common cloud data model of the state of the art,
- FIG 2: shows a first embodiment according to the invention,
- FIG 3: shows a second embodiment according to the invention,
- FIG 4: shows a third embodiment according to the invention,
- FIG 5: shows a diagram illustration according to the invention.

Although the invention has been illustrated and described in detail with reference to the preferred exemplary embodiment, the invention is not limited to the examples disclosed and other variations can be derived therefrom by the person skilled in the art without departing from the protective scope of the invention.

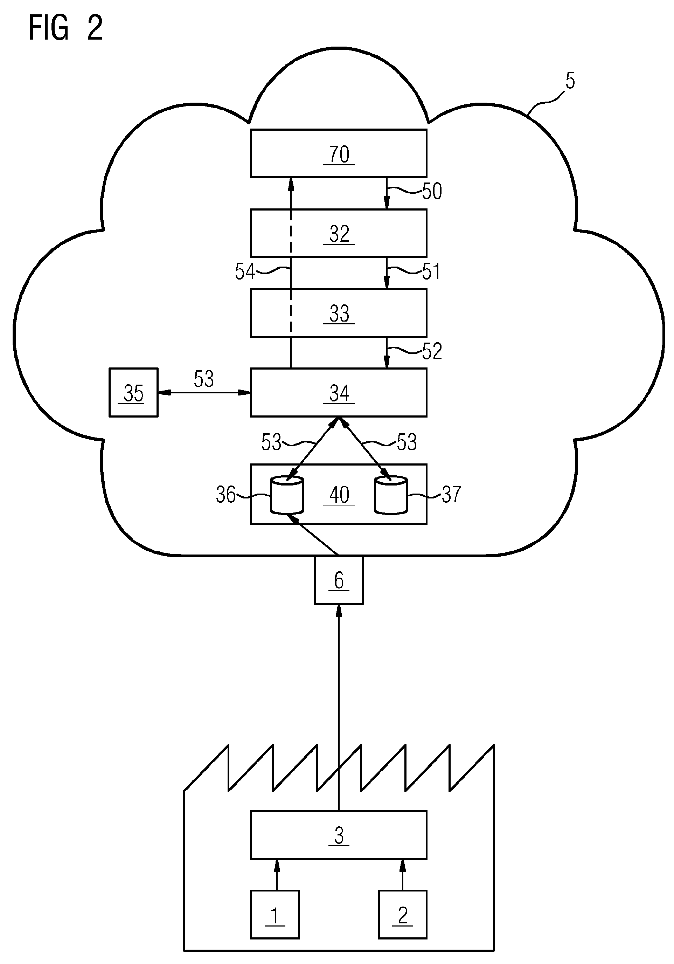

FIG 2 shows an application which is ported to the cloud as application 70, without re-developed so as to use the cloud data standard, instead using the OPC data standard from the agent 3.

The data are collected via a data-collection-agent 3, then transmitted to a proprietary-interface 6 and afterwards transmitted to a common cloud data model 4. Here the data are called data of interest 36 are stored in the data store in the generic cloud-storage data model of the common cloud data model 40.

Fig 2 shows a cloud based application 70 that wants to query some data of interest 36, which is stored in the data store. The data of interest 36 is stored in the generic cloud-storage data model. The cloud-storage data model with the data of interest 36 is hidden to the cloud based application 70 and not directly accessible.

The structure of the data of interest 36, the relationship between data entities and required semantical information by a meta data 37 is stored in a meta-data store which is also not directly accessible via the cloud based application 70.

The cloud based application 70 sends a request (arrow 50) in the desired data protocol (e.g. OPC-UA DA, MODBUS, BACNet,...) to a service endpoint called load balancer 32. There is technically no limitation of the selected protocol. Preferably it is a UDP or TCP based protocol.

The load balancer 32 primarily is a cloud infrastructure which is able to route (arrow 51) the request to a model router 33 that has computing capacity. The computing capacity can be based on cloud load balancing. The model router 33 identifies the desired data protocol and transmits (arrow 34) the request based on the identified desired data protocol to a model transformer 34.

The model router 33 has therefore the following capabilities: It is able to determine the incoming request protocol format by typical technical attributes. The technical attributes depends on chosen protocol for example port number, HTTP header information, request structure.

Based on the identified protocol, the request is forwarded to a specific model transformer 34, which is specialized to transform the requested data into the chosen protocol and data model. So, there will be at least one specific transformer for each available desired data model. If the number of model transformers is scaled out, a new instance may be created, if there is no free capacity. If there are too many model routers 33 in a cloud infrastructure, the one instance which receives the request will handle the upcoming data exchange between the application 70 and the requested data.

So the model router 33 identifies the desired data protocol and transmits the request based on the identified desired data protocol to a suitable model transformer 34.

The specific model transformer 34 performs the actual data model transformation and compiles a response (arrow 54) for the cloud based application 70. It comprises the following capabilities:
It is able to access the data of interest 36 in the generic cloud-storage data model and the associated meta-data 37. It also has access (arrow 53) to a transformation rule database 35, which contains rules for each specific transformation between the cloud data model and the concrete requested data model. Since the system is hosted in a scalable cloud environment, the number of model transformer 34 instances can be scaled out in a flexible, demand driven way. Thus, there is a need that all instances of the transformers 34 are able to work on the same rule sets, and this leads to a separate rules data transformation rules database 35.

Based on the rules 35 (arrow 53) the model transformer 34 is able to determine how a response (arrow 54) must be composed based on the existing information of the data of interest 36 (arrow 53), stored in the data store in the generic cloud-storage data model, and semantical meta data 37 information in the meta-data store (arrow 53).

The transformation rules include preferably at least information about data structure mappings from the cloud storage data structure to the desired model structure and / or data semantics mappings from the data store semantics to the desired model semantics. In addition or alternative the transformation rules include preferably information about data relationship mappings from the cloud storage data relationships to the desired model relationships. Furthermore the transformation rules include in addition or alternative information about rules reduction if the desired data model does not support the same expressiveness, e.g. for relations. This is for example, if the desired data model is not able to express a "contains" relationship between two data points. Furthermore the transformation rules include in addition or alternative information about rules reduction if the cloud data model does not support the same expressiveness as the desired data model.

That means for exapmle, that the model transformer makes the data structure mappings from the cloud data model to the target data model (e.g. OPC-UA). In this process, it may also use reduction rules (to interpolate the missing information in the target data model). The interpolation rules will be specific to the target data model (e.g. OPC-UA). An example where reduction rule will be applied is to generate a 'data quality' parameter for the OPC-UA data model in case this parameter is not present in the cloud data model.

The actual transformation model 34 at least consists of the following steps:
- the rules are fetched from the rule database 35,
- based on the cloud based application's 70 demand, all required data is fetched from the cloud data store,
- meta (semantic) data associated to all data of interest 36 are fetched from the meta-data store,
- based on the rules in the rule database 35, the model transformer 34 generates with the data of interest 36 a response in the format of the requested data model.

So for example: Consider that the application requests data in the form of OPC-UA data model. The rules database 35 contains rules for transforming data from the cloud data model to the OPC-UA data model. The semantic data along with the data from the cloud data store is combined together based on the data transformation rules by the model transformer to generate a response in the OPC-UA format for the application.

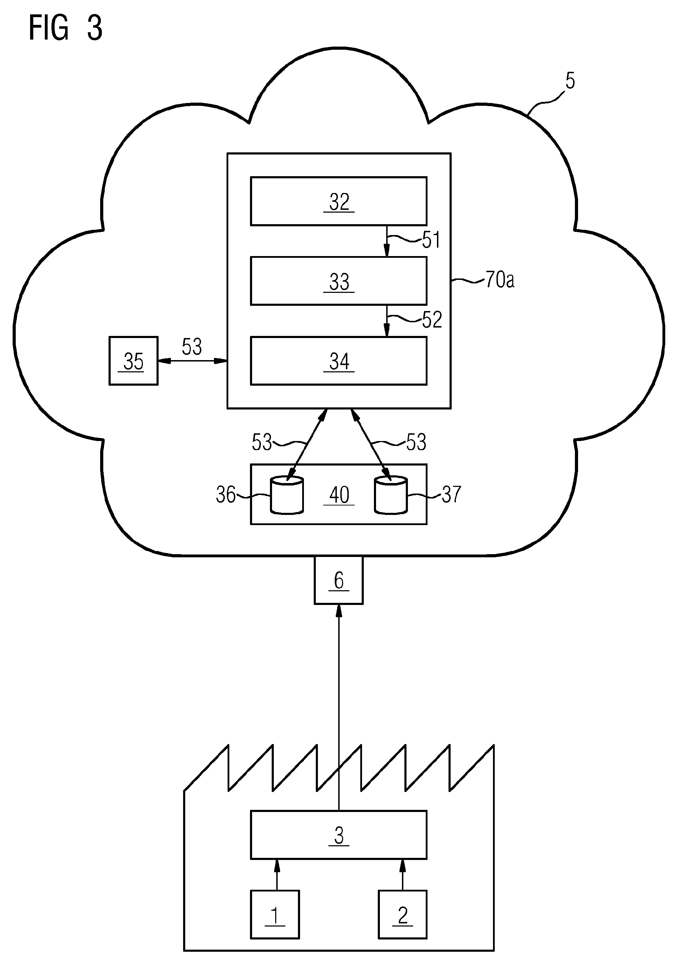

FIG 3 shows a second embodiment of the invention. Here the model transformer 34, the load balancer 32 and the model router 33 are directly integrated in the cloud-based application 70a.

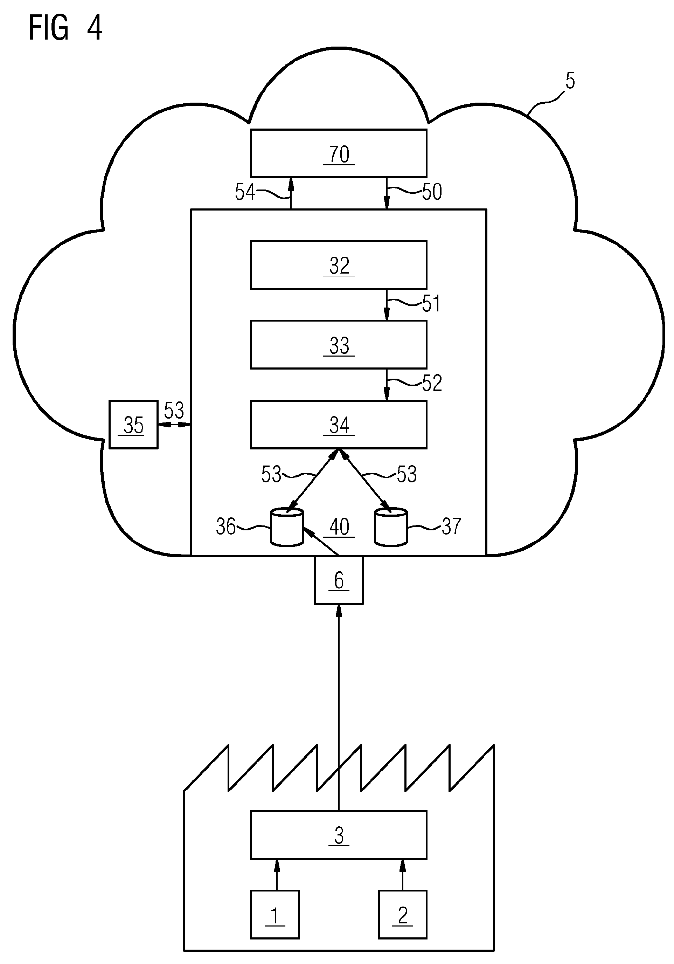

FIG 4 shows a third embodiment of the invention. In this embodiment the model transformer 34, the load balancer 32 and the model router 33 are directly integrated into the common cloud data model 40a. Of course these are just some examples which do not rule out other embodiments.

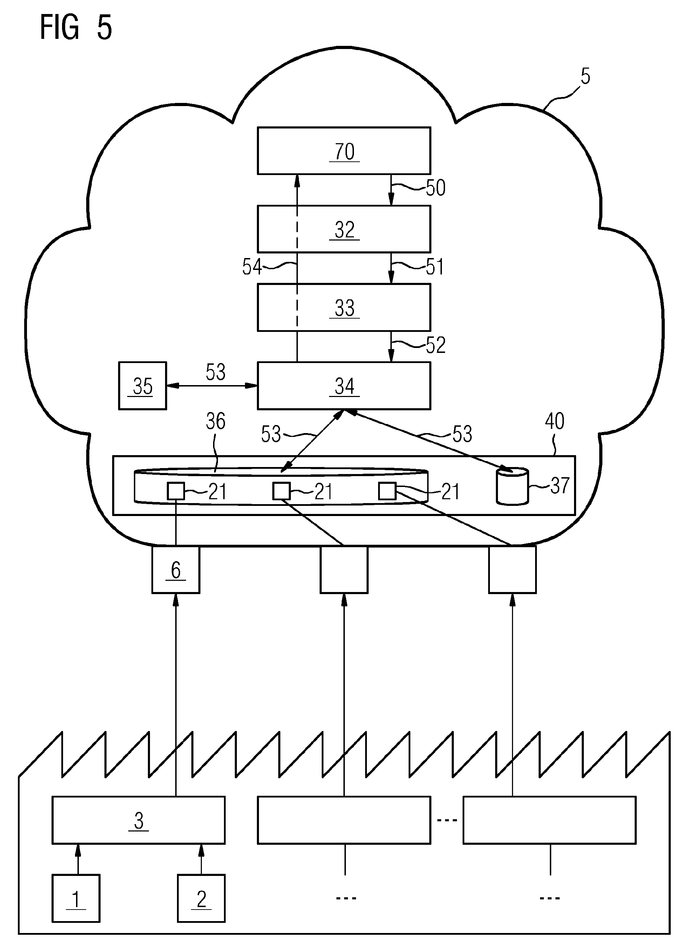

An exemplary diagram of an exposition of data model according to the invention is illustrated in FIG 5.

The idea here is to expose the common cloud data model 40 in a wide range of data model specific views. FIG 5 shows a the exposed data model 40, 40a and the exposed application 70, 70a, which, for example, are exposed with OPC-UA protocol 21 for applications 70,70a that are compatible with the OPC-UA protocol, the same data model 40,40a and the application 70, 70a exposed with BACNet protocol 21 for BACNet applications 70,70a compatible with BACNet protocol, the same data model 40,40a and the application 70, 70a exposed for ISO 15926 protocol 21 for ISO 15926 applications 70, 70a compatible with ISO 15926 protocol, the same data model 40,40a and the application 70, 70a exposed for Modbus protocol 21 for Modbus data model 40,40a and the exposed application 70, 70a compatible with Modbus protocol, the same data model 40,40a and the application 70, 70a exposed for OPC protocol 21 for OPC data model 40,40a and the application 70, 70a compatible with OPC protocol etc..

The applications 70,70a that access data based on different protocols may not only be in the cloud, but also can be running onsite (locally) in the production automation unit. The applications 70,70a can also be running in a separate, for example third party cloud.

Business will benefit from such a solution by supporting reuse of existing legacy tools and so safeguard these investments and at the same time allows cost-optimized big data storage based on cloud technology. With this, the innovative cloud infrastructure can be combined with legacy tool support. This lowers the entry barrier for application developers to readily make their applications compatible to the cloud.

## Claims

1. System configured to execute data model transformations on data for cloud based applications comprising:
• a computer device with a cloud infrastructure having a data store,
• the data store having data of interest (36), whereas the data of interest (36) are stored in a cloud storage data model,
• a cloud based application (70, 70a) which is configured to query the data of interest (36) by a request in a desired data protocol based on a desired data model structure,
• a meta-data store, which comprises at least the meta data (37) of the data of interest (36),
• a load balancer (32) with a cloud infrastructure, which is configured for receiving the request and for routing the request,
• a model router (33), which is configured for receiving the routed request and for identifying the desired data protocol and for transmitting the request based on the identified desired data protocol to a model transformer (34),
• the model transformer (34), which is configured for receiving the transmitted request and performing the data model transformation by:
- accessing the data of interest (36) in the data store and the meta data (37) of the data of interest (36) in the meta-data store,
- accessing a transformation rules database (35) which contains rules for each specific transformation between the cloud storage data model and the desired data protocol,
- determining a response based on the rules (35) and based on existing composed information in the data store and in the meta-data store.

2. System according to claim 1,
**characterized in that** the data store is not directly accessible to the cloud based application (70, 70a).

3. System according to claim 1 or 2,
**characterized in that** the meta-data store is not directly accessible to the cloud based application (70,70a).

4. System according to any one of claims 1 to 3,
**characterized in that** the desired data protocol is a Transmission Control Protocol and/or an User Datagram Protocol.

5. System according to any one of claims 1 to 4,
**characterized in that** the request is provided in the desired data protocol.

6. System according to any one of claims 1 to 5,
**characterized in that** the model router (33) is configured to have computing capacity.

7. System according to any one of claims 1 to 6,
**characterized in that** the model router (33) is configured to identify the desired data protocol by technical attributes based on the desired data protocol.

8. System according to claim 7,
**characterized in that** the technical attributes are the port number and/or the HTTP header information and/or the request structure.

9. System according to any one of claims 1 to 8, **characterized in that** the meta data (37) are configured to comprise the relationship between the data of interest (36) stored in the data store and the required meta data (37) information.

10. System according to any one of claims 1 to 9, **characterized in that** in the case of more than one model routers (33) the one which receives the request will handle the upcoming data exchance between the cloud based application (70,70a) and the specific model transformer (34).

11. System according to any one of claims 1 to 10, **characterized in that** there will be at least one specific model transformer (34) for each available desired protocol.

12. System according to any one of claims 1 to 11, **characterized in that** the transformation rules are configured to comprise at least one of the following information:
• Data structure mappings from the cloud storage data model to the desired protocol in a desired data model structure,
• Data semantics mappings from the cloud storage data model semantics to the desired model semantics,
• Data relationship mappings from the cloud storage data model relationships to the desired model relationships,
• Reduction rules if the desired data model does not support the same expressiveness,
• Reduction rules if the cloud storage data model does not support the same expressiveness as the desired data model.

13. System according to any one of claims 1 to 12, **characterized in that** the model transformer (34) configured to fetch the rules from the rule database (35).

14. System according to any one of claims 1 to 13, **characterized in that** the model transformer (34) is configured to fetch all required data from the data store based on the cloud based application's (70) demand.

15. System according to any one of claims 1 to 14 **characterized in that** the model transformer (34) is configured to fetch all associated meta data (37) of the data of interest (36) from the meta-data store.

16. System according to any one of claims 1 to 15, **characterized in that** the model transformer (34) is configured to generate a response in the format of the requested data model based on the rules.

17. Method configured to execute data model transformations on data for cloud based applications the method comprising:
• providing a computer device with a cloud infrastructure having a data store,
• providing of data of interest (36) in the data store, whereas the data of interest (36) are stored in the cloud storage data model,
• providing a cloud based application (70,70a) which is configured to query the data of interest (36) by a request in a desired data protocol based on a desired data model structure,
• providing a meta-data store which at least comprises the meta data (37) of the data of interest (36),
• providing a load balancer (32) with a cloud infrastructure which is configured for receiving the request and for routing the request,
• providing a model router (33) which is configured for receiving the routed request and for identifying the desired data protocol and for transmitting the request based on the identified desired data protocol to a model transformer (34),
• providing the model transformer (34) which is configured for receiving the transmitted request and performing the data model transformation by:
- accessing the data of interest (36) in the data store and the meta data (37) of the in the meta-data store,
- accessing a transformation rule database (35) which contains rules for each specific transformation between the cloud storage data model and the desired data protocol,
- determining a response based on the rules (35) and based on existing composed information in the data store and in the meta-data store.

18. Method according to claim 17,
**characterized in that** there is no direct accessibility from the cloud based application (70, 70a) to the data store.

19. Method according to claim 17 or 18,
**characterized in that** there is no direct accessibility from the cloud based application (70,70a) to the meta-data store.

20. Method according to any one of claims 17 to 19, wherein the method comprises:
providing the request in the desired data protocol.

21. Method according to any one of claims 17 to 20, **characterized in that** the model router (33) is configured to have computing capacity.

22. Method according to any one of claims 17-21, wherein the model router (33) comprises:
identifying the desired data protocol by technical attributes based on the desired data protocol.

23. Method according to any one of claims 17 to 22, **characterized in that** the transformation rules are configured to comprise at least one of the following information:
• Providing data structure mappings from the cloud storage data model to the desired protocol in a desired data model structure,
• Providing data semantics mappings from the cloud storage data model semantics to the desired model semantics,
• Providing data relationship mappings from the cloud storage data model relationships to the desired model relationships,
• Reducing the rules, if the desired data model does not support the same expressiveness,
• Reducing the rules, if the cloud data storage model does not support the same expressiveness as the desired data model.

24. Method according to any one of claims 17 to 23, **characterized in that** the rules are fetched from the rule database (35).

25. Method according to any one of claims 17 to 24, **characterized in that** based on the cloud based application's demand, all required data is fetched from the data store.

26. Method according to any one of claims 17 to 25, **characterized in that** all associated data is fetched from the meta-data store.

27. Method according to any one of claims 17 to 26, **characterized in that** based on the rules, the model transformer (34) is configured to generate a response in the format of the requested data model.
